Europäisches Patentamt

(19) European Patent Office

Office européen des brevets

(11) Veröffentlichungsnummer: **0 237 536**
**B1**

(12) **EUROPÄISCHE PATENTSCHRIFT**

(45) Veröffentlichungstag der Patentschrift: **18.07.90**

(51) Int. Cl.⁵: **F 16 H 47/04**

(21) Anmeldenummer: **86905221.7**

(22) Anmeldetag: **16.09.86**

(86) Internationale Anmeldenummer:
**PCT/DE86/00367**

(87) Internationale Veröffentlichungsnummer:
**WO 87/01781 26.03.87 Gazette 87/07**

(54) STUFENLOSES HYDROMECHANISCHES VERZWEIGUNGSGETRIEBE FÜR KRAFTFAHRZEUGE.

(30) Priorität: **18.09.85 DE 3533192**
**24.03.86 DE 3609907**

(43) Veröffentlichungstag der Anmeldung:
**23.09.87 Patentblatt 87/39**

(45) Bekanntmachung des Hinweises auf die
Patenterteilung:
**18.07.90 Patentblatt 90/29**

(84) Benannte Vertragsstaaten:
**FR GB IT SE**

(56) Entgegenhaltungen:
**EP-A-0 081 696**
**DE-A-2 541 975**
**FR-A-2 220 027**
**FR-A-2 387 388**
**US-A-4 184 385**
**US-A-4 368 653**

(73) Patentinhaber: **Meyerle, Michael**
**Kiefernweg 9**
**D-7996 Meckenbeuren-Lochbrücke (DE)**
(84) **FR GB IT SE**

(72) Erfinder: **Meyerle, Michael**
**Kiefernweg 9**
**D-7996 Meckenbeuren-Lochbrücke (DE)**

(74) Vertreter: **Münich, Wilhelm, Dr. et al**
**Kanzlei Münich, Steinmann, Schiller**
**Willibaldstrasse 36/38**
**D-8000 München 21 (DE)**

Courier Press, Leamington Spa, England.

**Beschreibung**

Die Erfindung bezieht sich auf ein stufenloses hydrostatisch-mechanisches Verzweigungsgetriebe für Kraftfahrzeuge, nach dem Oberbegriff des Anspruchs 1 bzw. Anspruchs 2.

Im Oberbegriff des Anspruchs 1 bzw. Anspruchs 2 ist eine Spreizung des ersten Fahrbereichs aufgeführt. Unter diesem Begriff ist Überbrückung des ersten Übersetzungsbereichs vom Anfahrpunkt, also der Fahrgeschwindigkeit "0" bis zum Übersetzungspunkt "X", zu verstehen.

Aus der DE—C—3 147 447 (=EP—A—81 696) ist ein hydrostatischmechanisches Stellkoppelgetriebe mit eingangsseitiger Leistungsverzweigung bekannt, das eine erste Hydrostateinheit verstellbaren Volumens sowie eine zweite Hydrostateinheit konstanten Volumens hat. Bei dem bekannten Getriebe ist im Anfahrzustand bei geschlossener erster Bereichskupplung die erste, verstellbare Hydrostateinheit auf ihr maximales Verstellvolumen ausgeregelt. Das Summierungsplanetengetriebe ist so ausgelegt, daß die Getriebeabtriebswelle in diesem Betriebszustand bereits auf eine gewisse Abtriebsdrehzahl entsprechend einer bestimmten Mindestgeschwindigkeit des Fahrzeugs über eine Anfahrkupplung als Reibungskupplung gezwungen wird. Bei dem bekannten Getriebe ist zwischen Antriebsmotor und Antriebswelle des Getriebes eine separate Anfahrkupplung vorgesehen.

Aus der DE—A—2 541 975 ist es bekannt, bei einem hydromechanischen Verzweigungsgetriebe im Kreislauf von Hydrostateinheiten ein Bypaßventil vorzusehen. Das Bypaßventil dient bei dem bekannten Getriebe jedoch nicht dem Anfahren, sondern es wird lediglich zum vollständigen Entkuppeln der Hydrostateinheiten geöffnet.

Der Erfindung liegt die Aufgabe zugrunde, ein stufenloses hydrostatisch mechanisches Verzweigungsgetriebe zu schaffen, das zur Vergrößerung des Getriebewandlungsbereichs bzw. der Getriebeeckleistung zugunsten höherer Leistungsdichte einen gespreizten Anfahrbereich besitzt und ohne separate Anfahrkupplung auskommt.

Erfindungsgemäß wird die Aufgabe durch die im Kennzeichen der Ansprüche 1 und 2 aufgeführten Merkmale gelöst.

Die Erfindung weist gegenüber dem bekannten Getriebe dieser Art mit zusätzlicher Anfahrkupplung den Vorteil auf, daß es einfacher und kostengünstiger ist und außerdem den für eine Anfahrkupplung erforderlichen Bauraum einspart, und daß die Getriebeantriebswelle unmittelbar mit dem Antriebsmotor verbunden ist. Die Erfindung kommt ohne "eigene" Anfahrkupplung aus. Bauraum und Kosten können gespart werden.

Die Erfindung wird an Ausführungsbeispielen anhand von Zeichnungen erläutert. Es zeigen

Fig. 1 ein hydromechanisches Verzweigungsgetriebe mit zwei hydromechanischen Vorwärtsfahrbereichen, wobei der erste Fahrbereich um ein Übersetzungsmaß X gespreizt, und der Rückwärtsbereich ebenfalls gespreizt ist,

Fig. 2 einen Drehzahlplan zum Ausführungsbeispiel gemäß Fig. 1,

Fig. 3 eine Getriebeausführung mit zwei Vorwärtsfahrbereichen und einem Rückwärtsfahrbereich, wobei der erste Vorwärtsfahrbereich und der Rückwärtsfahrbereich ebenfalls gespreizt sind,

Fig. 4 einen Drehzahlplan zum Ausführungsbeispiel gemäß Fig. 3,

Fig. 5 eine Getriebeausführung mit drei Vorwärtsfahrbereichen und einem Rückwärtsfahrbereich, wobei erster Vorwärtsfahrbereich und Rückwärtsfahrbereich gespreizt sind,

Fig. 6 einen Drehzahlplan zum Ausführungsbeispiel gemäß Fig. 5.

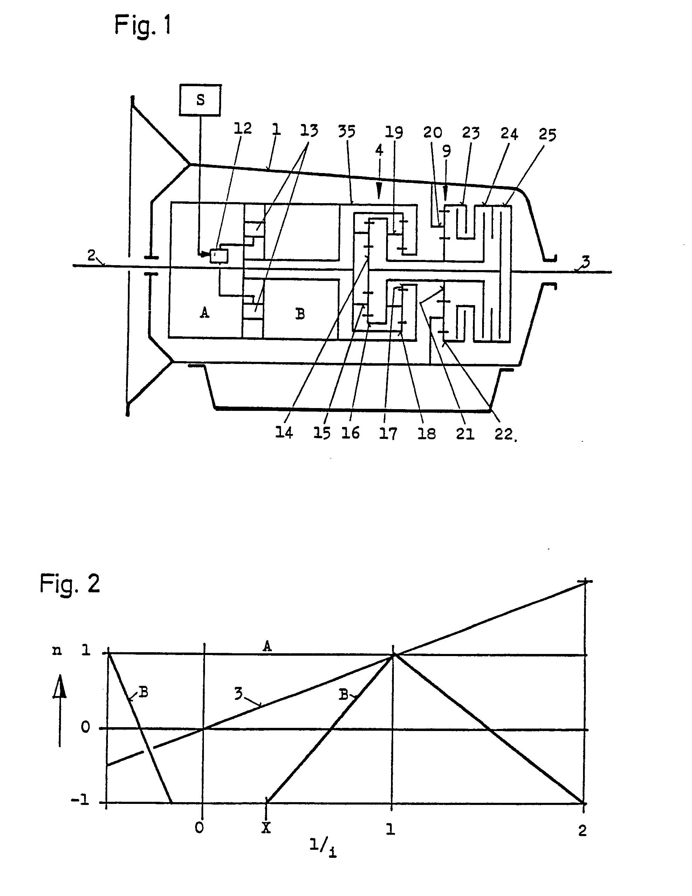

Bei einem ersten Ausführungsbeispiel (Fig. 1) ist ein hydromechanisches Verzweigungsgetriebesystem verwendet, bestehend aus einer ersten Hydrostateinheit A verstellbaren Volumes und einer zweiten Hydrostateinheit B, vorzugsweise konstanten Volumens, einem vierwelligen Summierungsplanetengetriebe 4, einem dazugeordneten dreiwelligen Planetengetriebe 9, vorzugsweise versehen mit einem Sonnenrad 21 und einem Hohlrad 22 sowie aus drei Bereichskupplungen, Kupplung 24 für den ersten Vorwärtsfahrbereich, Kupplung 25 für den zweiten Vorwärtsfahrbereich und Kupplung 23 für den Rückwärtsbereich. Das Summierungsgetriebe 4 besteht aus zwei Planetengetrieben mit jeweils einem Sonnenrad, einem Steg und einem Hohlrad.

Die erste Welle des Summierungsgetriebes ist mit dem Steg 15 der ersten Planetenradstufe sowie mit dem Hohlrad 18 der zweiten Planetenradstufe verbunden und hat eine direkte Verbindung mit der Antriebswelle 2 und der ersten Hydrostateinheit A. Die zweite Welle des Summierungsgetriebes steht in Verbindung mit einem Hohlrad 16 der ersten Planetenstufe und mit einem Steg 19 der zweiten Planetenstufe und ist gleichzeitig verbunden mit dem Sonnenrad 21 des Planetengetriebes 9 sowie einem Glied der ersten Bereichskupplung, der Kupplung 24. Die vierte Welle des Summierungsgetriebes 4 bildet ein Sonnenrad 14 der ersten Planetenstufe und ist verbunden mit einem Glied einer zweiten Bereichskupplung, einer Kupplung 25. Die beiden Hydrostatgetriebeeinheiten A und B können bei dieser Ausführungsform kompakt zu einer Getriebeeinheit bzw. einer Baueinheit zusammengefaßt werden, ebenfalls die Baugruppen-Summierungsplanetengetriebe 4, zweiter Planetentrieb 9 sowie das Kupplungspaket mit den Kupplungen 23, 24, 25. Alle Baueinheiten können, wie dargestellt, koaxial zueinander angeordnet, wie auch parallel zueinander versetzt angeordnet werden, je nach den Fahrzeugforderungen. Die Verbindung der einzelnen Wellen zueinander bei versetzt angeordneter Bauweise geschieht über entsprechende Übersetzungsstufen. Eine Prinzipbzw. Systemveränderung erfolgt dadurch nicht. Die versetzte Anordnung ist insbesondere für Fahrzeuge mit quer eingebautem Motor, z.B. beim PKW sowie auch bei Schwerfahrzeuggetrieben, Bussen, NKWs und Arbeitsmaschinen, von Vorteil.

2

Nachfolgend wird die Funktion des Getriebes beschrieben.

Nachfolgend wird die Funktion des Getriebes beschrieben.

Das Summierungsgetriebe 4 ist so ausgelegt, daß, wie beschrieben, im Anfahrzustand die zweite Hydrostateinheit B über die zweite Welle, Sonnenrad 17 des Summierungsgetriebes bei geschlossener erster Bereichskupplung 24 angetrieben wird, und zwar mit einer Drehzahl, die wesentlich höher ist, als die der ersten Hydrostateinheit A bei maximalem Verstellvolumen. Die zweite Hydrostateinheit B arbeitet in diesem Zustand als Pumpe. Die in dieser Betriebssituation auftretende Mehrförderung der zweiten Hydrostateinheit B, die von der ersten Hydrostateinheit A nicht aufgenommen werden kann, wird erfindungsgemäß durch das zwischen die beiden Hoch- und Niederdruckleitungen 13 des Hydrostatkreislaufes geschaltete Bypaßventil 12 ausgeglichen.

Beim Anfahren wird durch ein Signal S das Bypaßventil 12 allmählich geschlossen, wodurch zwangsläufig beide Hydrostateinheiten A und B entsprechend ihren Voluminas, die in diesem Zustand Maximalwert haben, auf gleiche Drehzahlgröße gezwungen. Die Abtriebswelle 3 ist bei diesem Schließvorgang des Bypaßventils 12 auf eine Drehzahl gebracht worden, die einer Mindestfahrgeschwindigkeit ententsprechend dem Übersetzungspunkt X (Fig. 2) entspricht. Dieser Anfahrvorgang entspricht dem Schließvorgang einer Anfahrkupplung eines konventionellen Getriebes bzw. dem Anfahrvorgang bei dem bekannten oben genannten hydromechanischen Getriebesystem. Um ein feinfühliges weiches Anfahren zu erzielen, wird das Bypaßventil 12 angesteuert durch ein Signal S aus der Bremseinrichtung—z.B. Loslassen des Bremspedals—oder/und der Motordrehzahl oder/und einem lastabhängigen Signal, z.B. dem Arbeitsdruck des Hydrostatgetriebes A, B.

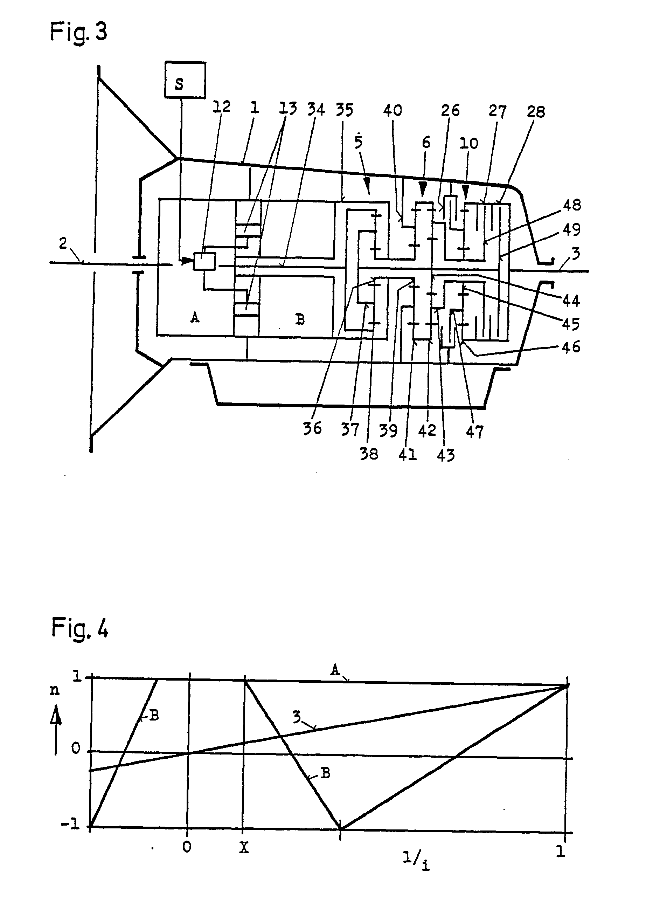

Das Ausführungsbeispiel nach Fig. 3 ist in der Anfahreinrichtung identisch mit der der Ausführung 1. Es unterscheidet sich jedoch durch ein anderes Verzweigungssystem, das darauf beruht, daß zwei Summierungsplanetengetriebe 5 und 6 vorgesehen sind. Das erste Summierungsplanetengetriebe besteht aus einer dreiwelligen Planetengetriebestufe, Sonnenrad 36, Steg 37 und Hohlrad 38. Das zweite Summierungsplanetengetriebe 6 ist ausgebildet mit zwei Planetentriebstufen, wobei jeweils ein Glied jeder Stufe, Sonnenrad 39 und Sonnenrad 44, mit zwei Wellen, Sonnenrad 36 und Steg 37 in ständiger Verbindung sind. Eine Abtriebswelle Steg 43 des zweiten Summierungsplanetengetriebes 6 steht in Verbindung mit einem weiteren Planetentrieb 10 sowie einem Kupplungsglied 48 der ersten Bereichskupplung 27. Ein Glied 49 der zweiten Bereichskupplung 28 ist mit einem Sonnenrad 44 des zweiten Summierungsplanetengetriebes 6 und einer Welle Steg 37 des ersten Summierungsplanetengetriebes 5 verbunden.

Gegenüber dem Ausführungsbeispiel nach Fig.

1 haben im Anfahrbereich die beiden Hydrostateinheiten A und B gleichsinnige Drehrichtung, wie aus Drehzahlplan Fig. 4 zu ersehen ist. Die Überbrückung des gespreizten Drehzahl- bzw. Übersetzungsbereiches bis Übersetzungspunkt X bzw. der Anfahrvorgang in diesem gespreizten Drehzahlbereich entspricht dem Ausführungsbeispiel nach Fig. 1. Die mechanische Leistung wird von der Antriebswelle über die erste Hydrostateinheit A der Welle 34 bzw. auf die erste Welle, Hohlrad 38 und die hydrostatische Leistung über die Welle 35, auf das Sonnenrad 36 des ersten Summierungsplanetengetriebes 5 übertragen. Die hydrostatische Leistung teilt sich innerhalb des ersten Betriebsbereichs gleichzeitig auf das zweite Summierungsplanetengetriebe 6 über das Sonnenrad 39 und wird so gleichzeitig über dessen beide Hohlräder 41 und 42 der Summenleistung am Sonnenrad 44, die aus dem ersten Summierungsplanetengetriebe 5 kommt, auf den Steg 43 des zweiten Summierungsplanetengetriebes aufsummiert. Im ersten Schaltbereich wird die Leistung über das Kupplungsglied 48 der Kupplung 27 auf die Abtriebswelle 3 übertragen. Im Rückwärtsbereich wird die Leistung bei geschlossener Kupplung bzw. Bremse 26 über die letzte Planetentriebstufe 10 auf das Sonnenrad 45, den Steg 47, das Hohlrad 46 auf die Abtriebswelle 3 übertragen.

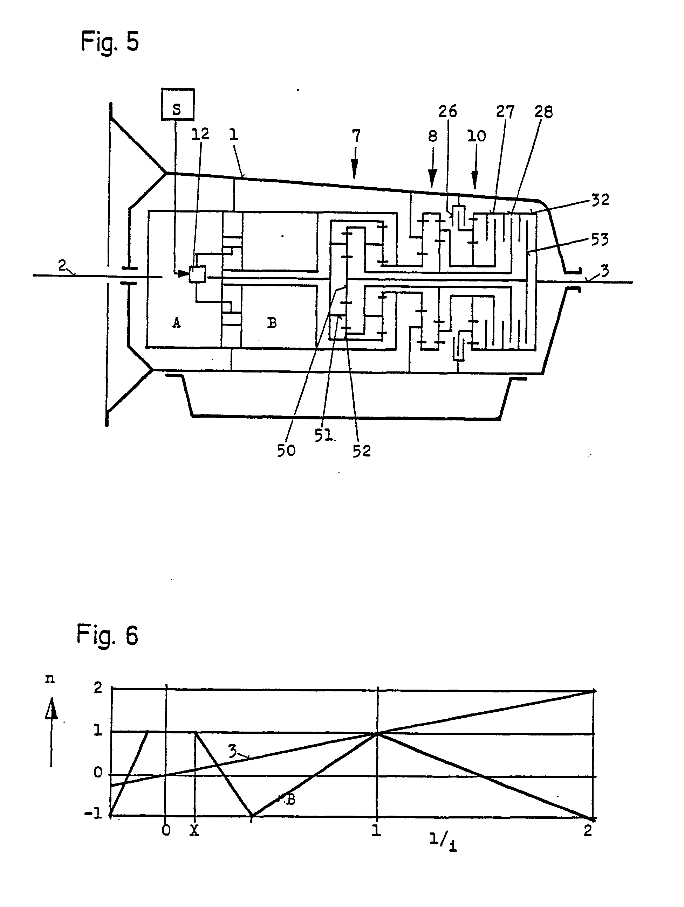

Das Ausführungsbeispiel nach Fig. 5 ist in der Funktion wie in seinem Aufbau weitgehend identisch mit demjenigen nach Fig. 3. Es unterscheidet sich im wesentlichen dadurch, daß ein zusätzlicher dritter Schaltbereich vorhanden ist, wodurch das Leistungsvolumen bzw. der Drehmomentwandlungsbereich des Getriebes bei gleichgroßem Hydrostatgetriebe nahezu um das Doppelte vergrößert wird. Der dritte Bereich wird dadurch realisiert, daß das erste Summierungsplanetengetriebe 7 als vierwelliges Planetengetriebe ausgebildet ist mit vorzugsweise einer weiteren Planetentriebstufe 50, 51, 52, und die vierte Welle, Sonnenrad 50, mit einem Glied 53 der dritten Bereichskupplung 32 verbunden ist. Der Drehzahlverlauf der Hydrostateinheiten A und B sowie der Abtriebswelle 3 ist in Fig. 6 dargestellt.

Durch die Bereichsspreizung des ersten Fahrbereiches nach dieser Art wird neben beträchtlicher Steigerung der Getriebeeckleistung ohne Bauraumvergrößerung sowohl ein sehr spontan wirkendes als auch feinfühlig dosierbares Anfahrverhalten erzielt, je nach Fahrerwunsch.

Die entsprechenden Steuersignale sind ohnehin bei derartigen Getrieben vorhanden, so daß der Kostenaufwand für die Anfahreinrichtung relativ niedrig ist.

Bei einem in den Zeichnungen nicht dargestellten Ausführungsbeispiel entfällt die Anfahreinrichtung durch das Bypaßventil 12. Stattdessen werden die Kupplung 24; 27 für den ersten Bereich bzw. die Kupplung bzw. Bremse 23, 26 als Anfahrkupplung zusätzlich benutzt. Dies bedeutet, daß der Übersetzungsbereich bis zum Übersetzungspunkt X durch die entsprechende Kupplung überbrückt werden muß, indem diese—wie bei Anfahrkupplungen üblich—mit einem entsprechend dosierten, kontinuierlichen Druck beaufschlagt wird. Die für den kontinuierlichen Druckaufbau der Anfahrkupplung erforderlichen Signale sind mit den Signalen identisch, die oben erwähnt sind. Anstelle des Bypaßventils 12 dient hier ein (in den Zeichnungen nicht dargestelltes) Druckventil.

Zum Schließen der als Anfahrkupplung dienenden, ersten Bereichskupplung bzw. Rückwärtsfahrkupplung wird ein kontinuierlicher Kupplungsdruck erzeugt, der ein weiches Anfahrverhalten gewährleistet. Dieser Druck wird durch ein regelbares Druckventil, das durch ein entsprechendes Signal angesteuert wird, aufgebaut. Diese Signal ist beim Ausführungsbeispiel ein von der Bremsbetätigung abhängiges Sognal oder/und ein Motordrehzahlsignal oder/und ein lastabhängiges Signal.

Funktionsablauf

Bei getretener Bremse wird die Fahrtrichtung vorgewählt wie bei Fahrzeugen mit Automatgetriebe üblich. Beim Loslassen der Bremse wird das regelbare Druckventil bereits durch ein von der Bremseinrichtung abhängiges Signal angesteuert, um einen Kupplungsdruck zu erzeugen, der so groß ist, daß eine Mindestzugkraft an den Fahrzeugrädern entsteht, ohne den Motor unter eine Mindestleerlaufdrehzahlgröße zu drücken. Je nach Forderung kann durch ein zusätzliches Signal, z.B. aus der Motordrehzahl, das Druckregelventil zusätzlich beeinflußt werden, um den Kupplungsdruck weiter zu erhöhen bzw. den Bedingungen anzupassen. Es ist, z.B. über eine elektronische Regeleinrichtung, möglich, einen automatischen Einfluß auf die Motorregelung zu nehmen, so daß der Motor nicht abgewürgt werden kann, ohne das Gaspedal zu betätigen. Der Kupplungsdruck kann auch durch ein lastabhängiges Signal, z.B. über den Hochdruck des Hydrostatgetriebes allein oder zusätzlich, geregelt werden.

Durch diese Einrichtung ist es möglich, je nach den fahrzeugspezifischen Bedingungen, eine welche, feinfühlige und fahrzeuggerechte Anfahreinrichtung zu schaffen, die gegenüber den bekannten Einrichtungen große Kosten- und Bauraumvorteile bietet.

**Patentansprüche**

1. Stufenloses hydrostatisch-mechanisches Verzweigungsgetriebe für Kraftfahrzeuge mit einer ersten Hydrostateinheit (A) verstellbaren Volumens und einer zweiten Hydrostateinheit (B) vorzugsweise konstanten Volumens mit einem oder mehreren Summierungsgetrieben (4; 5, 6; 7, 8) zur Aufsummierung der am Getriebeeingang in einen hydraulischen und einen mechanischen Zweig aufsummierten Leistung, mit einer Einrichtung zur Spreizung des ersten Fahrbereichs, dadurch gekennzeichnet, daß

(a) bei geschaltetem erstem Bereich im Anfahrzustand bei Fahrgeschwindigkeit "Null" die erste Hydrostateinheit (A) auf großes, vorzugsweise maximales Verstellvolumen eingestellt ist und als Hydromotor arbeitet,

(b) die zweite Hydrostateinheit (B) als Pumpe arbeitet und das Summierungsgetriebe (4; 5, 6; 7, 8) so ausgelegt ist, daß in diesem Betriebszustand die zweite Hydrostateinheit (B) über das Summierungsgetriebe mit einer Drehzahl angetrieben wird, die im Verhältnis zur Größe der Spreizung des ersten Fahrbereichs höher als die Drehzahl der ersten Hydrostateinheit (A) ist,

(c) ein Bypaßventil (12) vorgesehen ist, das zwischen die beiden Hoch- und Niederdruckleitungen (13) des Hydrostatkreislaufs geschaltet ist und durch ein Signal angesteuert wird, wobei die zweite Hydrostateinheit (B) folglich eine wesentlich größere Ölfördermenge fördert, als die erste Hydrostateinheit (A) bei dem gegebenen Drehzahlverhältnissen maximal aufnehmen kann, und die Mehrförderung der zweiten Hydrostateinheit (B) über das Bypaßventil (12) auf die andere Seite (Niederdruckseite) des Hydrostatkreislaufs geleitet und somit dem Zulauf der zweiten Hydrostateinheit (B) zugeführt wird, und

(d) die Übersetzung des Summierungsgetriebes (4; 5, 6; 7, 8) so ausgelegt ist, daß sich bei geschlossenem Bypaßventil (12) in geschaltetem erstem Bereich durch Schließen der Kupplung (24; 27; 23; 26) eine Getriebeübersetzung (X) einstellt, die einer Mindestfahrgeschwindigkeit des Fahrzeugs entspricht.

2. Stufenloses hydrostatisch-mechanisches Verzweigungsgetriebe für Kraftfahrzeuge mit einer ersten Hydrostateinheit (A) verstellbaren Volumens und einer zweiten Hydrostateinheit (B) vorzugsweise konstanten Volumens mit einem oder mehreren Summierungsgetrieben zur Aufsummierung der am Getriebeeingang in einen hydraulischen und einen mechanischen Zweig aufsummierten Leistung, mit einer Einrichtung zur Spreizung des ersten Fahrbereichs, wobei im Anfahrbereich die erste Hydrostateinheit (A) auf großes, vorzugsweises maximales Verstellvolumen eingestellt ist und als Hydromotor arbeitet, die zweite Hydrostateinheit (B) als Pumpe arbeitet, und das Summierungsgetriebe (4; 5, 6; 7, 8) so ausgelegt ist, daß im Anfahrzustand über eine Reibeinheit (23; 26; 24; 27) ein durch eine Spreizung der Übersetzung bedingtes Steuerloch bis zur Erreichung eines Übersetzungspunktes (X) überbrückt wird, was einer bestimmten Mindestgeschwindigkeit des Fahrzeugs entspricht, wobei die Reibeinheit (23; 26; 24; 27) durch ein dem Anfahren dienendes Signal angesteuert wird, dadurch gekennzeichnet, daß die Reibeinheit eine dem Summierungsgetriebe (4; 5, 6; 7, 8) zugeordnete Bereichskupplung oder -bremse (24, 27; 23, 26) ist.

3. Verzweigungsgetriebe nach einem der Ansprüche 1 oder 2, dadurch gekennzeichnet, daß das das Bypaßventil (12) oder das die als Bereichskupplung bzw. -bremse dienende Einheit (23; 26; 24; 27) ansteuerende Signal (S) ein Bremssignal oder/und ein Motordrehzahlsignal oder/

und ein lastabhängiges Signal, z.B. aus dem Hydrostatdruck, ist.

4. Verzweigungsgetriebe nach einem der Ansprüche 1 oder 2, dadurch gekennzeichnet, daß die beiden Hydrostateinheiten (A, B) im Anfahrbereich gegensinnige Drehrichtungen haben, das Summierungsgetriebe (4) als vierwelliges Planetengetriebe ausgebildet und diesem ein zweites dreiwelliges Planetengetriebe (9) mit einem Sonnenrad (21) und einem Hohlrad (22) mit einer, mit dem Abtrieb verbindbaren Kupplung (23) zugeordnet ist (Fig. 1).

5. Verzweigungsgetriebe nach einem der Ansprüche 1 oder 2, dadurch gekennzeichnet, daß die beiden Hydrostateinheiten (A, B) im Anfahrbereich gleichsinnige Drehrichtungen aufweisen, das Getriebe ein erstens Summierungsplanetengetriebe (5), ein zweites Summierungsplanetengetriebe (6) sowie ein weiters Planetengetriebe (10) umfaßt, das über eine Kupplung bzw. Bremse (26) mit der Antriebswelle (3) in Triebverbindung bringbar ist, über eine Kupplung (27) ein erster Fahrbereich und über eine weitere Kupplung (28) ein zweiter Fahrbereich schaltbar ist (Fig. 3).

6. Verzweigungsgetriebe nach einem der Ansprüche 1 oder 2, dadurch gekennzeichnet, daß beide Hydrostateinheiten (A, B) im Anfahrbereich gleichsinnige Drehrichtungen aufweisen, dem Hydrostatgetriebe ein erstes vierwelliges Summierungsgetriebe als Planetengetriebe sowie ein weiteres Summierungsplanetengetriebe (8) zugeordnet, über drei Kupplungen (27, 28 und 32) ein erster, ein zweiter und ein dritter Fahrbereich schaltbar und über eine Bremse (26) durch ein zusätzliches dreiwelliges Planetengetriebe der Rückwärtsbereich schaltbar ist (Fig. 5).

7. Verzweigungsgetriebe nach einem der Ansprüche 1 bis 6, dadurch gekennzeichnet, daß das Signal ein Bremssignal oder/und ein Motordrehzahlsignal oder/und ein lastabhängiges Signal, vorzugsweise aus dem Hydrostatdruck, ist.

8. Verzweigungsgetriebe nach einem der Ansprüche 2 bis 7, dadurch gekennzeichnet, daß die als Anfahrkupplung dienende Kupplung bzw. Bremse (24; 27; 23; 26) mit einem Druck beaufschlagt wird, der durch Loslassen der Bremse erzeugt wird.

9. Verzweigungsgetriebe nach einem der Ansprüche 1 bis 8, dadurch gekennzeichnet, daß durch einregelbares Druckventil ein kontinuierlicher Druckaufbau zum Schließen der als Anfahrkupplung dienenden Kupplung bzw. Bremse (24; 27; 23; 26) vorgesehen ist.

10. Verzweigungsgetriebe nach einem der Ansprüche 2 bis 9, dadurch gekennzeichnet, daß ein regelbares Druckventil zum Schließen der Anfahrkupplung durch Loslassen der Bremse und gleichzeitig durch ein Motordrehzahlsignal beeinflußt wird, und das Drehmoment der Anfahrkupplung so dosiert wird, daß eine Mindestmotordrehzahl aufrechterhalten bleibt.

11. Verzweigungsgetriebe nach einem der Ansprüche 2 bis 10, dadurch gekennzeichnet, daß ein regelbares Druckventil zum Schließen der Anfahrkupplungen vorgesehen ist, das durch ein Bremssignal durch Loslassen der Bremse und gleichzeitig durch ein Motordrehzahlsignal angesteuert wird, wobei die Motordrehzahl durch eine zusätzliche Einrichtung automatisch so weit angehoben wird (z.B. durch eine elektronische Motorregelung), daß die Anfahrkupplung voll geschlossen wird und ein Drehmoment übertragen kann, das den jeweiligen Betriebssituationen entspricht.

12. Verzweigungsgetriebe nach einem der Ansprüche 2 bis 11, dadurch gekennzeichnet, daß für kontinuierlichen Druckaufbau der Anfahrkupplung ein regelbares Druckventil vorgesehen ist, das durch ein Bremssignal durch Loslassen des Bremspedals und durch ein Motordrehzahlsignal bis zu einem Abtriebsmoment angesteuert wird, das einer Mindestleerlaufgröße des Motors entspricht, und der weitere Druckaufbau bis zum vollen Schließen der Anfahrkupplung durch Gasgeben erzeugt wird.

13. Verzweigungsgetriebe nach einem der Ansprüche 2 bis 12, dadurch gekennzeichnet, daß das Signal zum Schließen der Anfahrkupplung durch ein lastabhängiges Signal übersteuert wird.

14. Verzweigungsgetriebe nach einem der Ansprüche 1 bis 13, dadurch gekennzeichnet, daß das Signal ein Anfahrsignal ist und je nach Wahl der Anfahrrichtung entweder das Bypaßventil oder die Anfahrkupplung bzw. Anfahrbremse unmittelbar oder mittelbar angesteuert wird.

## Revendications

1. Transmission hydromécaniques à dérivation et à réglage continu pour véhicules à moteur comprenant une première unité hydraulique (A) à volume réglable et une deuxième unité hydraulique (B) à volume de préférence constant, un ou plusieurs jeux d'engrenages totalisateurs (4; 5, 6; 7, 8) pour totaliser la puissance additionnée à l'entrée de la transmission dans une branche hydraulique et dans une branche mécanique, et un dispositif pour élargir la gamme de la première vitesse, caractérisée par le fait que:

a) lorsque la première vitesse est enclenchée au démarrage pour la vitesse "zéro" du véhicule, la première unité hydraulique (A) est réglée à un volume important, et de préférence maximal, et elle travaille en moteur hydraulique,

b) la deuxième unité hydraulique (B) travaille en pompe et le jeu d'engrenages totalisateur (4; 5, 6; 7, 8) est conçu de telle manière que, dans cet état de fonctionnement, la deuxième unité hydraulique (B) est entraînée par le jeu d'engrenages totalisateur (4; 5, 6; 7, 8) à une vitesse de rotation qui est supérieure à la vitesse de rotation de la première unité hydraulique (A) en proportion de la valeur de l'élargissement de la gamme de la première vitesse,

c) il est prévu un clapet de dérivation (12) qui est branché entre les deux conduites (13) à haute et à basse pression du circuit hydraulique et qui est excité par un signal, à la suite de quoi la deuxième unité hydraulique (B) déplace un débit d'huile nettement plus important que celui qui peut être absorbé au maximum par la première unité hydraulique (A) pour les conditions données de la vitesse de rotation, et la quantité supplémentaire déplacée par la deuxième unité hydraulique (B) est amenée par le clapet de dérivation (12) vers l'autre côté (côté à basse pression) du circuit hydraulique et est ainsi amenée à l'entrée de la deuxième unité hydraulique (B), et:

d) le rapport de transmission du jeu d'engrenages totalisateur (4; 5, 6; 7, 8) est conçu de telle manière que, lorsque le clapet de dérivation (12) est fermé et que la première vitesse est enclenchée, la fermeture de l'accouplement (24; 27; 23; 26) règle le rapport de transmission à une valeur (X) qui correspond à une vitesse de déplacement minimale du véhicule.

2. Transmission hydromécanique à dérivation et à réglage continu pour véhicules à moteur comprenant une première unité hydraulique (A) à volume réglable et une deuxième unité hydraulique (B) à volume de préférence constant, un ou plusieurs jeux d'engrenages totalisateurs pour totaliser la puissance additionnée à l'entrée de la transmission dans une branche hydraulique et dans une branche mécanique, et un dispositif pour élargir la gamme de la première vitesse, cependant qu'au démarrage, la première unité hydraulique (A) est réglée à au volume important, et de préférence maximal, et travaille en moteur hydraulique, que la deuxième unité hydraulique (B) travaille en pompe et que le jeu d'engrenages totalisateur (4; 5, 6; 7, 8) est conçu de telle manière qu'au démarrage, un défaut d'asservissement causé par un élargissement du rapport de transmission est couvert grâce à une unité à friction (23; 26; 24; 27) jusqu'à ce que soit atteint un point (X) du rapport de transmission qui correspond à une vitesse minimale déterminée du véhicule, l'unité à friction (23; 26; 24; 27) étant excitée par un signal servant au démarrage, caractérisée par le fait que l'unité à friction est un embrayage ou un frein (24, 27; 23; 26) associé au jeu d'engrenages totalisateur (4; 5, 6; 7, 8).

3. Transmission à dérivation selon l'une des revendications 1 ou 2, caractérisée par le fait que le signal (S) qui excite le clapet de dérivation (12) ou l'unité servant d'embrayage ou de frein (23; 26; 24; 27) est un signal de freinage et/ou un signal de vitesse de rotation du moteur et/ou un signal dépendant de la charge et provenant par exemple de la pression hydraulique.

4. Transmission à dérivation selon l'une des revendications 1 ou 2, caractérisée par le fait que les deux unités hydrauliques (A, B) présentent des sens de rotation opposés dans la zone du démarrage, que le jeu d'engrenages totalisateur (4) est réalisé sous la forme d'un train planétaire à quatre arbres, et qu'il lui est associé un deuxième train planétaire (9) à trois arbres comprenant un planétaire (21) et une couronne (22) avec un embrayage (23) qui peut être relié à l'entraînement (figure 1).

5. Transmission à dérivation selon l'une des revendications 1 ou 2, caractérisée par le fait que les deux unités hydrauliques (A, B) présentent le même sens de rotation dans la zone du démarrage, que la transmission comprend un premier train planétaire totalisateur (5), un deuxième train planétaire totalisateur (6), ainsi qu'un autre train planétaire (10) qui peut être amené en liaison motrice avec l'arbre d'entraînement (3) par un embrayage ou, respectivement, un frein (26), et qu'une première vitesse peut être enclenchée au moyen d'un embrayage (27), une deuxième vitesse pouvant l'être au moyen d'un autre embrayage (28) (figure 3).

6. Transmission à dérivation selon l'une des revendications 1 ou 2, caractérisée par le fait que les deux unités hydrauliques (A, B) présentent le même sens de rotation dans la zone du démarrage, qu'est associé à la transmission hydraulique un premier jeu d'engrenages totalisateur à quatre arbres sous la forme d'un train planétaire, ainsi qu'un autre train planétaire totalisateur (8), que l'on peut enclencher une première, une deuxième et une troisième vitesses au moyen de trois embrayages (27, 28 et 32), et que la marche arrière peut être enclenchée au moyen d'un frein (26) grâce à un train planétaire supplémentaire à trois arbres (figure 5).

7. Transmission à dérivation selon l'une des revendications 1 à 6, caractérisée par le fait que le signal est un signal de freinage et/ou un signal de vitesse de rotation du moteur et/ou un signal dépendant de la charge et provenant de préférence de la pression hydraulique.

8. Transmission à dérivation selon l'une des revendications 2 à 7, caractérisée par le fait que l'embrayage ou, respectivement, le frein (24; 27; 23; 26) qui sert d'accouplement de démarrage est actionné par une pression qui est engendrée lorsque l'on relâche le frein.

9. Transmission à dérivation selon l'une des revendications 1 à 8, caractérisée par le fait que, grâce à un clapet de pression réglable, il est prévu une montée en pression continue pour fermer l'embrayage ou, respectivement, le frein (24; 27; 23; 26) qui sert d'accouplement de démarrage.

10. Transmission à dérivation selon l'une des revendications 2 à 9, caractérisée par le fait qu'un clapet de pression réglable destiné à fermer l'accouplement de démarrage est influencé par le relâchement des freins et, en même temps, par un signal de vitesse de rotation du moteur, et que le couple de l'accouplement de démarrage est dosé de telle manière qu'une vitesse de rotation minimale du moteur reste conservée.

11. Transmission à dérivation selon l'une des revendications 2 à 10, caractérisée par le fait qu'un clapet de pression réglable est prévu pour fermer l'accouplement de démarrage et qu'il est excité par un signal de freinage dû au relâchement des freins et, en même temps, par un signal de vitesse de rotation du moteur, la vitesse de rotation du moteur étant augmentée automatiquement par un dispositif supplémentaire (par exemple par une régulation automatique du moteur) jusqu'à ce que l'accouplement de démarrage soit complètement fermé et qu'il puisse transmettre un couple correspondant à chaque état de fonctionnement.

12. Transmission à dérivation selon l'une des revendications 2 à 11, caractérisée par le fait qu'un clapet de pression réglable est prévu pour la montée en pression continue de l'accouplement de démarrage et qu'il est excité par un signal de freinage dû au relâchement des freins et par un signal de vitesse de rotation du moteur jusqu'à un couple d'entraînement qui correspond à une valeur minimale de marche à vide du moteur, et que la suite de la montée en pression jusqu'à la fermeture complète de l'accouplement de démarrage est engendrée en donnant des gaz.

13. Transmission à dérivation selon l'une des revendications 2 à 12, caractérisée par le fait que le signal destiné à fermer l'accouplement de démarrage est commandé à son tour par un signal dépendant de la charge.

14. Transmission à dérivation selon l'une des revendications 1 à 13, caractérisée par le fait que le signal est un signal de démarrage et que, selon la direction choisie pour le démarrage, c'est, soit le clapet de dérivation, soit l'embrayage de démarrage ou, respectivement, le frein de démarrage qui est excité directement ou indirectement.

**Claims**

1. Infinitely variable hydromechanical branched transmission for motor vehicles, with a first hydrostatic unit (A) of adjustable volume and a second hydrostatic unit (B) of preferably constant volume, with one or more summation gearings (4; 5, 6; 7, 8) for adding the power which at the gearing input is summated (added?) into a hydraulic and a mechanical branch, with a device for spreading (expanding?) the first operating range (zone?), characterized by the fact that

(a) when the first range is selected, in the starting stage, with a travelling speed of "zero", the first hydrostatic unit (A) is adjusted to a high and preferably maximum adjustment volume and operates as a hydrostatic motor,

(b) the second hydrostatic unit (B) operates as a pump and the summation gearing is so designed that in this operating state the second hydrostatic is driven via the summation gearing at a rotation speed which, in proportion to the magnitude of the spread of the operating zone, is higher than the rotation speed of the first hydrostatic unit (A),

(c) a bypass valve (12) is provided which is connected between the two high pressure and low pressure lines (13) of the hydrostatic circuit and is actuated by a signal, the second hydrostatic unit (B) therefore conveying a far greater quantity of oil than the maximum quantity which the first hydrostatic unit (A) can receive under the prevailing rotation speed conditions, and the extra quantity conveyed by the second hydrostatic unit (B) is conveyed via the bypass valve (12) to the other side (low pressure side) of the hydrostatic circuit and thus to the inlet of the second hydrostatic unit (B), and

(d) the transmission ratio of the summation gearing (4; 5, 6; 7, 8) is selected to ensure that with the bypass valve (12) closed, in the selected first range, by closing the coupling (clutch?) (24; 27; 23; 26), a gearing transmission (X) occurs which corresponds to a minimum travelling speed of the vehicle.

2. Infinitely variable hydromechanical branched transmission for motor vehicles, with a first hydrostatic unit (A) of adjustable volume and a second hydrostatic unit (B) of preferably constant volume, with one or more summation gearings for adding the power which at the gearing input is summated (added?) into a hydraulic and mechanical branch, with a device for spreading (expanding?) the first operating range (zone?), while in the starting range the first hydrostatic unit (A) is adjusted to a high and preferably maximum adjustment volume and operates as a hydrostatic motor, the second hydrostatic unit (B) operates as a pump and the summation gearing (4; 5, 6; 7, 8) is so designed that in the starting state, via a friction unit (23; 26; 24; 27), a "control hole" caused by a spreading of the transmission is bridged until a transmission point (X) is reached, which corresponds to a certain minimum speed of the vehicle, the friction unit (23; 26; 24; 27) being actuated by a signal serving for the starting operation, characterized by the fact that the friction unit consists of a range coupling or range brake (24, 27; 23, 26) allocated to (associated with?) the summation gearing (4; 5, 6; 7, 8).

3. Branched transmission in accordance with one of Claims 1, 2, characterized by the fact that the signal (S) controlling the bypass valve (12) or controlling the unit (23; 26; 24; 27) serving as a range coupling or range brake is a brake signal and/or a motor rotation speed signal and/or a load-governed signal, e.g. a signal resulting from the hydrostatic pressure.

4. Branched transmission in accordance with one of Claims 1, 2, characterized by the fact that the two hydrostatic units (A, B) have opposite directions of rotation in the starting range the summation gear (4) is constructed as a four-shaft planetary gearing and that there is associated with this latter a second three-shaft planetary gearing (9) with a sun wheel (21) and a hollow wheel (22) with a coupling (23) connectable to the take-off (output, driven side) (Fig. 1).

5. Branched transmission in accordance with one of Claims 1, 2, characterized by the fact that the two hydrostatic units (A, B) have opposite directions of rotation in the starting range, the gearing comprises a first summation planetary gearing (6) and a further planetary gearing (10), which can be operatively connected via a clutch or brake (26) with the output shaft (3), and that a first driving range can be selected via a clutch (27) and a second via a further clutch (28) (Fig. 3).

6. Branched transmission in accordance with one of Claims 1, 2, characterized by the fact that the two hydrostatic units (A, B) have in the starting zone opposite directions of rotation, there being associated with the hydrostatic gearing a first four-shaft summation gearing as a planetary gearing and also a further summation planetary gearing (8), while a first, a second and a third operating range are selectable via three clutches (27, 28 and 32) and a reverse range is selectable by a three-shaft additional planetary gearing via a brake (26).

7. Branched transmission in accordance with one of Claims 1—6, characterized by the fact that the signal is a brake signal and/or a motor rotation speed signal and/or a load-governed signal, preferably one resulting from the hydrostatic pressure.

8. Branched transmission in accordance with one of Claims 2—7, characterized by the fact that the clutch or brake (24; 27; 23; 26) serving as a starting clutch is subjected to a pressure generated by the release of the brake.

9. Branched transmission in accordance with one of Claims 1—8, characterized by the fact that by means of a controllable pressure valve a continuous build-up of pressure is provided for the closing of the clutch or brake (24; 27; 23; 26) serving as a starting clutch.

10. Branched transmission in accordance with one of Claims 2—9, characterized by the fact that a controllable pressure valve for the closure of the starting clutch is influenced by the release of the brake and at the same time by a motor rotation speed signal, and the torque of the starting clutch is so apportioned that a certain minimum motor rotation speed is maintained.

11. Branched transmission in accordance with one of Claims 2—10, characterized by the fact that a controllable pressure valve is provided for the closure on the starting clutches and is actuated by means of a braking signal by the release of the brake and at the same time by a motor rotation speed, the motor rotation speed being automatically raised by an additional device (e.g. an electronic motor control), and that the starting clutch is completely closed and is able to transmit a torque corresponding to the operating conditions prevailing at the time.

12. Branched transmission in accordance with one of Claims 2—11, characterized by the fact that for the continuous build up of the pressure of the starting clutch a controllable pressure value is provided which is actuated via a braking signal by the release of the brake pedal and via a motor rotation speed signal until a certain output (take-off?) torque is reached which corresponds to a minimum no-load value of the motor, the further build-up of pressure to the complete closure of the starting clutch being generated by the use of the accelerator (opening of the throttle?).

13. Branched transmission in accordance with one of Claims 2—12, characterized by the fact that the signal as far as the closure of the starting clutch is overdriven by a load-governed signal.

14. Branched transmission in accordance with one of Claims 1—13, characterized by the fact that the signal is a starting signal and that, according to the starting direction selected, either the bypass valve or the starting clutch or starting brake is actuated directly or indirectly.

Fig. 1

Fig. 2

Fig. 3

Fig. 4

2

## Fig. 5

## Fig. 6